# EUROPEAN PATENT APPLICATION

(11) **EP 4 095 809 A1**
(43) Date of publication of application: **30.11.2022**
(21) Application number: 21743834.0
(22) Date of filing: 06.01.2021
(51) Int. Cl.: G06T 19/00, H04N 7/18

(54) **IMAGE GENERATION DEVICE, IMAGE GENERATION METHOD, AND PROGRAM**

(30) Priority: 20.01.2020 JP 2020006726
(71) Applicant: Sony Group Corporation, Minato-Ku, Tokyo, 108-0075 (JP)
(72) Inventor: SHIMIZU Itaru, Tokyo 108-0075 (JP); UMEDA Tetsuo, Tokyo 108-0075 (JP); KIKUCHI Naomichi, Tokyo 108-0075 (JP)
(74) Representative: Witte, Weller & Partner Patentanwälte mbB
(86) International application number: PCT/JP2021/000141
(87) International publication number: WO 2021/149484

(57) **Abstract**

The present technology relates to an image generation device, an image generation method, and a program capable of observing any point on the ground from a free viewpoint in the sky at any time.

The image generation device includes an image generation unit that generates a free viewpoint image of a predetermined point on the ground viewed from a predetermined virtual viewpoint in the sky using a 3D model of a stationary subject generated using a satellite image captured by an artificial satellite and dynamic subject identification information that identifies a dynamic subject. The present technology can be applied to, for example, an image generation device and the like that generate a free viewpoint image from a satellite image captured by an artificial satellite.

## Description

### [Technical Field]

The present technology relates to an image generation device, an image generation method, and a program, and particularly, to an image generation device, an image generation method, and a program capable of observing any point on the ground from a free viewpoint in the sky at any time.

### [Background Art]

Earth observation is being carried out by observation satellites equipped with an imaging device (refer to PTL 1, for example). Particularly in recent years, the number of low-orbit small observation satellites has increased.

In the technical field of virtual reality (VR), a 3D model that allows an object to be reproduced and displayed as a subject from any free viewpoint is used. Three-dimensional data of a 3D model of a subject is converted into, for example, a plurality of texture images and depth images captured from a plurality of viewpoints, transmitted to a reproduction device, and displayed on the reproduction side (refer to PTL 2, for example).

### [Citation List]

### [Patent Literature]

[PTL 1]
   JP 2006-277007 A
[PTL 2]
   WO 2017/082076

### [Summary]

### [Technical Problem]

When the Earth is observed, there may be a desire to observe any point on the ground at any time from a free viewpoint in the sky, as in VR. However, in the case of a geostationary satellite, it is difficult to perform observation with high resolution because it is located at an altitude of 36,000 km, and only a specific point can be observed because the position of the satellite is fixed. Further, in the case of an orbiting satellite that orbits in a low orbit or a medium orbit, it can view only from the viewpoint on the orbit and thus cannot view from a free viewpoint. Therefore, it is impossible to sufficiently meet a desire to observe any point on the ground at any time from a free viewpoint in the sky at present.

The present technology in view of such circumstances makes it possible to observe any point on the ground at any time from a free viewpoint in the sky.

### [Solution to Problem]

An image generation device of one aspect of the present technology includes an image generation unit that generates a free viewpoint image of a predetermined point on the ground viewed from a predetermined virtual viewpoint in the sky using a 3D model of a stationary subject generated using a satellite image captured by an artificial satellite and dynamic subject identification information that identifies a dynamic subject.

An image generation method of one aspect of the present technology includes generating, by an image generation device, a free viewpoint image of a predetermined point on the ground viewed from a predetermined virtual viewpoint in the sky using a 3D model of a stationary subject generated using a satellite image captured by an artificial satellite and dynamic subject identification information that identifies a dynamic subject.

A program of one aspect of the present technology causes a computer to serve as an image generation unit that generates a free viewpoint image of a predetermined point on the ground viewed from a predetermined virtual viewpoint in the sky using a 3D model of a stationary subject generated using a satellite image captured by an artificial satellite and dynamic subject identification information that identifies a dynamic subject.

In one aspect of the present technology, a free viewpoint image of a predetermined point on the ground viewed from a predetermined virtual viewpoint in the sky is generated using a 3D model of a stationary subject generated using a satellite image captured by an artificial satellite and dynamic subject identification information that identifies a dynamic subject.

The image generation device of one aspect of the present technology can be realized by causing a computer to execute a program. The program executed by the computer can be provided by being transmitted via a transmission medium or by being recorded on a recording medium.

The image generation device may be an independent device or an internal block constituting one device.

### [Brief Description of Drawings]

[Fig. 1]

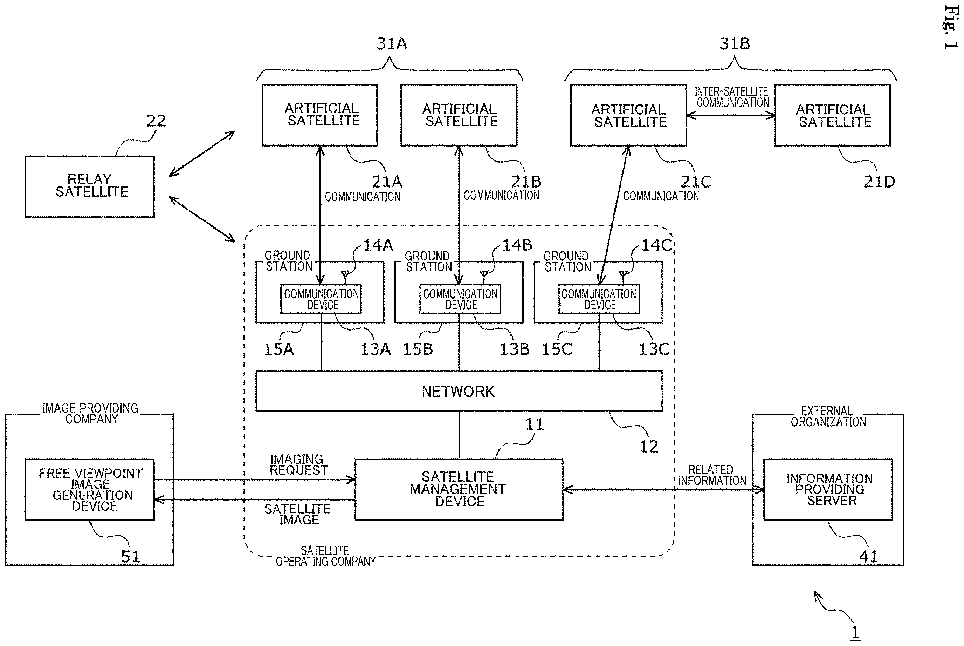

   Fig. 1 is a block diagram showing a configuration example of a satellite image processing system as an embodiment to which the present technology is applied.
[Fig. 2]

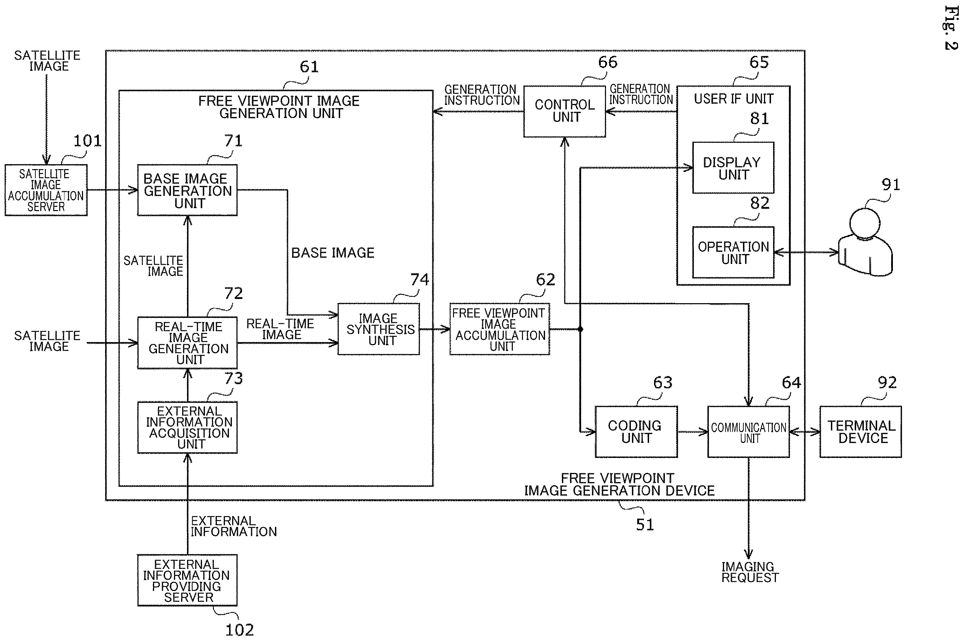

   Fig. 2 is a block diagram showing a detailed configuration example of a free viewpoint image generation device.
[Fig. 3]

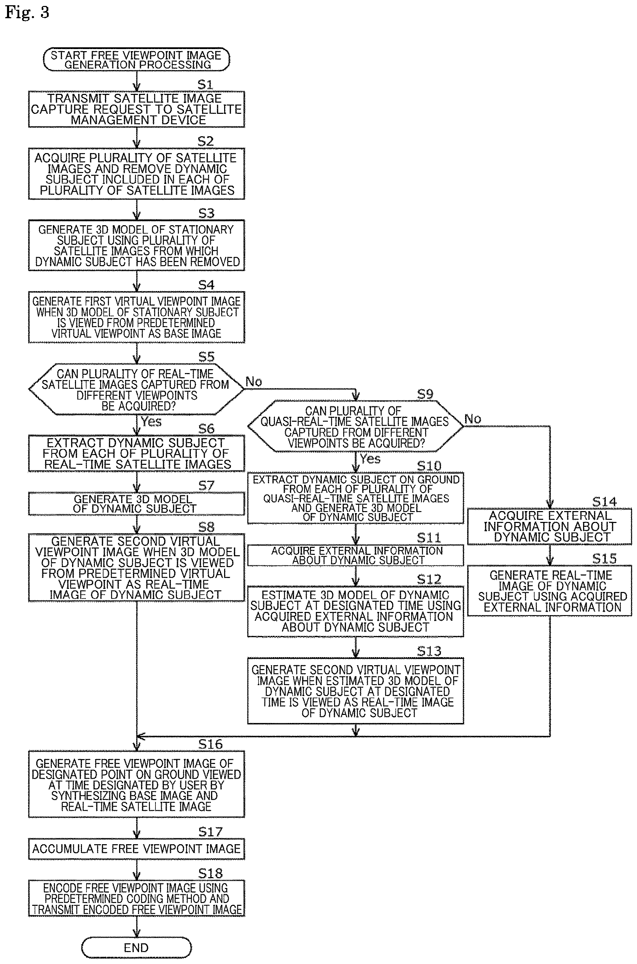

   Fig. 3 is a flowchart illustrating free viewpoint image generation processing executed by the free viewpoint image generation device.
[Fig. 4]

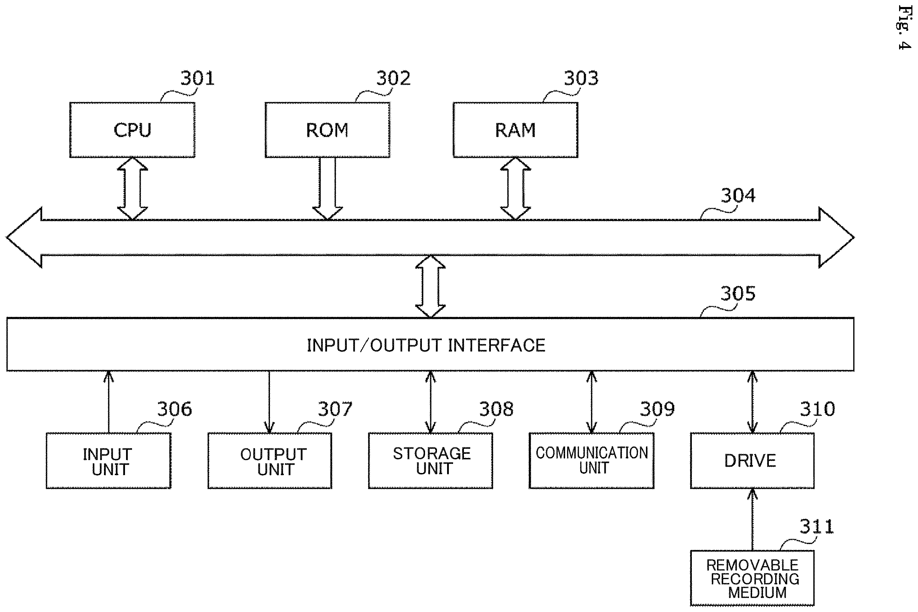

   Fig. 4 is a block diagram showing a configuration example of an embodiment of a computer to which the present technology is applied.

### [Description of Embodiments]

Hereinafter, embodiments for implementing the present technology (hereinafter referred to as embodiments) will be described with reference to the accompanying drawings. Also, in the present specification and the figures, components having substantially the same functional configuration will be denoted by the same reference numerals, and thus repeated descriptions thereof will be omitted. The description will be made in the following order.
1. Configuration example of satellite image processing system
2. Volumetric capture technology
3. Configuration example of free viewpoint image generation device
4. Free viewpoint image generation processing
5. Application examples
6. Configuration example of computer

### <1. Configuration example of satellite image processing system>

Fig. 1 is a block diagram showing a configuration example of a satellite image processing system as an embodiment to which the present technology is applied.

The satellite image processing system 1 of Fig. 1 is a system capable of observing any point on the ground at any time from a free viewpoint in the sky using images (hereinafter, referred to as satellite images) captured by a plurality of artificial satellites (hereinafter, simply referred to as satellites). In the present embodiment, a satellite is equipped with an imaging device and has at least a function of imaging the ground.

A satellite operating company has a satellite management device 11 that manages a plurality of satellites 21 and a plurality of communication devices 13 that communicate with the satellites 21. Some of the satellite management device 11 and the plurality of communication devices 13 may be devices owned by a company other than the satellite operating company. The satellite management device 11 is connected to the plurality of communication devices 13 via a predetermined network 12. The communication devices 13 are disposed in a ground station (ground base station) 15. Although Fig. 1 shows an example in which the number of communication devices 13 is three, that is, communication devices 13A to 13C, the number of communication devices 13 is arbitrary.

The satellite management device 11 manages the plurality of satellites 21 owned by the satellite operating company. Specifically, the satellite management device 11 acquires related information from an information providing server 41 of one or more external organizations as necessary and determines an operation plan of the plurality of satellites 21 owned thereby. Then, the satellite management device 11 causes a predetermined satellite 21 to capture images by instructing the predetermined satellite 21 to capture images through the corresponding communication device 13 in response to a desire of a client. Further, the satellite management device 11 acquires and stores satellite images transmitted from the satellite 21 via the communication device 13. The acquired satellite images are subjected to predetermined image processing as necessary and provided (transmitted) to the client. Further, the acquired satellite images are provided (transmitted) to a free viewpoint image generation device 51 of an image providing company.

The information providing server 41 installed in the external organization supplies predetermined related information to the satellite management device 11 via a predetermined network in response to a request from the satellite management device 11 or regularly. The related information provided from the information providing server 41 includes the following, for example. For example, satellite orbit information written in Two Line Elements (TLE) format can be acquired as related information from North American Aerospace Defense Command (NORAD) as an external organization. Further, for example, meteorological information such as the weather at a predetermined point on the ground and the amount of clouds can be acquired from a meteorological information providing company as an external organization.

The free viewpoint image generation device 51 executes image processing of generating a free viewpoint image that is a satellite image observed from a free viewpoint in the sky with respect to any point on the ground at any time using satellite images captured by the satellites 21 supplied from the satellite management device 11 via a predetermined network. The free viewpoint image generation device 51 transmits a request for capturing satellite images to the satellite management device 11 as necessary in response to a generation instruction from a user 91 (Fig. 2). Free viewpoint image generation processing may be performed by the satellite operating company, and in this case, the satellite operating company and the image providing company are the same company. Further, the satellite management device 11 and the free viewpoint image generation device 51 may be realized as one device.

The communication device 13 communicates with a predetermined satellite 21 designated by the satellite management device 11 via an antenna 14 under the control of the satellite management device 11. For example, the communication device 13 transmits an imaging instruction for imaging a predetermined area on the ground to a predetermined satellite 21 at a predetermined time and position. Further, the communication device 13 receives satellite images transmitted from the satellite 21 and supplies them to the satellite management device 11 via the network 12. Transmission from the communication device 13 of the ground station 15 to the satellite 21 is also referred to as uplink, and transmission from the satellite 21 to the communication device 13 is also referred to as downlink. The communication device 13 can perform direct communication with the satellite 21 and can also perform communication via a relay satellite 22. As the relay satellite 22, for example, a geostationary satellite is used.

The network 12 and the network between the information providing server 41 or the free viewpoint image generation device 51 and the satellite management device 11 is any communication network, which may be a wired communication network, a wireless communication network, or both thereof. Further, the network 12 and the network between the information providing server 41 or the free viewpoint image generation device 51 and the satellite management device 11 may be configured as a single communication network or a plurality of communication networks. For example, these networks can be configured as a communication network or a communication channel of any communication standard, such as the Internet, a public telephone network, a wide area wireless mobile communication network such as the so-called 4G or 5G network, a wireless communication network that performs communication in compliance with wide area network (WAN), local area network (LAN), or Bluetooth (registered trademark) standards, a communication channel of short-range wireless communication such as near field communication (NFC), a communication channel of infrared communication, and a communication network of wired communication in compliance with standards such as high-definition multimedia interface (HDMI) (registered trademark) or a Universal Serial Bus (USB).

Each of the plurality of satellites 21 may be operated as one satellite (single satellite) or may be operated in units of a satellite group composed of a plurality of satellites. In the example of Fig. 1, illustration of the satellite 21 operated as a single satellite is omitted, and satellites 21A and 21B constitute a first satellite group 31A and satellites 21C and 21D constitute a second satellite group 31B. Although an example in which one satellite group 31 is composed of two satellites 21 is shown in the example of Fig. 1 for simplicity, the number of satellites 21 constituting one satellite group 31 is not limited to two.

There are constellation and formation flight as systems that operate a plurality of satellites 21 as one unit (satellite group). Constellation is a system that uniformly develops services mainly globally by launching a large number of satellites into a single or plurality of orbital planes. Each of the satellites constituting the constellation has a predetermined function, and a plurality of satellites are operated for the purpose of improving the frequency of observation, and the like. On the other hand, the formation flight is a system in which a plurality of satellites are deployed while maintaining a relative positional relationship in a narrow area of about several kilometers. The formation flight can provide services that cannot be realized by a single satellite, such as high-precision 3D measurement and speed detection of moving objects. In the present embodiment, a satellite group is operated by any of constellation and formation flight.

When the communication device 13 communicates with each satellite 21 constituting the satellite group 31, there are a method of individually communicating with each satellite 21 as in the case of the first satellite group 31A of Fig. 1 and a method in which only one satellite 21C representing the satellite group 31 (hereinafter, also referred to as a representative satellite 21C) communicates with the communication device 13 and the other satellites 21D indirectly communicate with the communication device 13 according to inter-satellite communication with the representative satellite 21C as in the case of the second satellite group 31B. Which method will be used to communicate with (the communication device 13 of) the ground station 15 may be determined in advance by the satellite group 31 or may be appropriately selected according to details of communication. The satellite 21 operated as a single satellite may also communicate with the communication device 13 of the ground station 15, or may communicate with the communication device 13 of the ground station 15 via the relay satellite 22. When the satellite 21 is moving within the communication range of the communication device 13 installed in the ground station 15, the satellite 21 can downlink to the communication device 13 at a predetermined frequency. When the satellite 21 is moving outside the communication range of the communication device 13 installed in the ground station 15, the satellite 21 can perform transmission to another satellite 21 located within the communication range of the communication device 13 installed in the ground station 15 according to inter-satellite communication and can downlink to the ground station 15 via the other satellite 21. Accordingly, it is possible to guarantee real-time characteristics of satellite images.

The satellite image processing system 1 is configured as described above.

The satellite management device 11 or the free viewpoint image generation device 51 can execute the following image processing on satellite images captured by the individual satellites 21.

### (1) Generation of metadata

Metadata can be generated based on information transmitted from the satellite 21 and information on the satellite 21 that has performed imaging. For example, information on the latitude and longitude of an imaging target position, information on attitude control and acceleration of the satellite 21 at the time of imaging, and the like can be generated as metadata. Metadata may be generated by the satellite 21 based on conditions at the time of imaging, and the like, and in that case, metadata added in advance to a satellite image captured by the satellite 21 may be used.

### (2) Satellite image correction processing

Correction processing such as radiometric correction with respect to sensitivity characteristics, geometric correction of an orbital position, an attitude error and the like of the satellite 21, orthophoto correction for correcting geometric distortion caused by height differences of terrain, and map projection for projecting onto a map projection surface can be performed.

### (3) Color synthesis processing

It is possible to perform color synthesis processing such as pan sharpening processing, true color synthesis processing, false color synthesis processing, natural color synthesis processing, SAR image synthesis processing, and processing for adding colors to a satellite image for each band.

### (4) Other image synthesis

It is possible to perform synthesis of a satellite image captured by a satellite (satellite 21) in the past, a satellite image captured by another satellite 21, and some other images, synthesis of satellite images captured in different bands, synthesis of map information, and the like.

### (5) Information extraction

It is possible to calculate vegetation detection information such as a normalized difference vegetation index (NDVI) and water detection information such as a normalized difference water index (NDWI) by different bands such as R (red) and IR (infrared). It is possible to perform highlight processing of a specific subject such as a vehicle, a moving object, or a school of fish, extraction of information on a specific band and a changed point with respect to previous imaging, and the like.

In particular, when a plurality of satellite images captured by a plurality of satellites 21 performing constellation or formation flight are used, the satellite management device 11 or the free viewpoint image generation device 51 can more effectively perform image processing which will be described below.

### (1) High resolution or high quality processing

It is possible to generate a satellite image with improved resolution by superimposing a plurality of satellite images. In addition, it is possible to generate a satellite image with increased resolution by synthesizing a pan-sharpened image obtained by combining monochrome images and color images, and satellite images having different imaging conditions such as different dynamic ranges and shutter speeds, different bands (wavelength bands), and different resolutions.

### (2) Function sharing

It is possible to calculate an index such as a normalized difference vegetation index (NDVI) using different bands such as R (red) and IR (infrared).

### (3) 3D measurement

It is possible to obtain three-dimensional information from a parallax image. In addition, it is possible to improve the accuracy of object recognition on the ground by using three-dimensional information. For example, it is possible to determine whether an object is a vehicle (even if an image does not immediately indicate that an object is a vehicle due to the resolution, if what is on a road is a three-dimensional object rather than a pattern, it can be inferred to be a vehicle).

### (4) Difference measurement

It is possible to extract change between a first time and a second time using a plurality of satellite images captured from the same position with a time difference. In addition, imaging of extracting and coloring only a changed target may be performed. Further, for example, it is possible to calculate a moving speed of a ship or a vehicle or calculate a wind speed from the movement of clouds or the like using a plurality of satellite images.

### (5) Other image synthesis

It is also possible to perform synthesis of a past satellite image and satellite images captured by other satellites 21, synthesis of satellite images captured in different bands, synthesis of map information, and the like.

The individual satellites 21 may transmit satellite images obtained by imaging the ground to the communication device 13 as RAW data or may transmit satellite images after the above-described image processing is performed.

### (Image formats)

A processed image after image processing and a satellite image are stored in a storage unit of each device and transmitted to other devices using, for example, the following image formats.

### (1) CEOS

CEOS is a format standardized by the committee on Earth Observation Satellites. CEOS includes "CEOS-BSQ" in which files are divided for each band and "CEOS-BIL" in which a plurality of bands are multiplexed.

### (2) HDF

It is a format developed by the National Center for Supercomputing Applications (NCSA) of the University of Illinois. A plurality of bands are combined into a single file such that data can be easily exchanged in various computer environments.

### (3) Geo TIFF

This is a format in which information for remote sensing has been added to a tagged image file format (TIFF). It is in the TIFF and thus can be opened with a general image viewer or the like.

### (4) JPEG2000

This is an image format standardized by the Joint Photographic Experts Group. JPEG 2000 not only increases a compression ratio but also employs a technology for improving an image of a region of interest and a copyright protection technology such as digital watermarking.

### <2. Volumetric capture technology>

A technology for providing a free viewpoint image by generating a 3D model of a subject from images captured from multiple viewpoints (including moving images) and generating a virtual viewpoint image of the 3D model depending on an arbitrary viewing position is known. This technology is also called a volumetric capture technology.

The free viewpoint image generation device 51 applies the volumetric capture technology to satellite images to generate a free viewpoint image which is a satellite image observed from a free viewpoint in the sky with respect to any point on the ground at any time.

Therefore, first, generation of a 3D model of a subject when a person or the like is the subject, and display of a free viewpoint image based on the generated 3D model will be briefly described.

In generation of a 3D model, a plurality of captured images can be obtained by imaging a predetermined imaging space in which a subject is disposed from the outward vicinity thereof using a plurality of imaging devices. The captured images are composed of, for example, moving images.

The subject in the foreground which is a display target in the imaging space is extracted using the captured images obtained from the plurality of imaging devices in different directions, and a 3D object that is a 3D model of the subject is generated (3D modeling). For example, the 3D object is generated by Visual Hull that projects the silhouette of the subject at each viewpoint to a 3D space and makes intersection areas of the silhouettes a 3D shape, Multi View Stereo that uses consistency of texture information between viewpoints, or the like.

Then, among one or more 3D objects present in the imaging space, data of one or more 3D objects (hereinafter, also referred to as 3D model data) is transmitted to a device on the reproduction side and reproduced. That is, the device on the reproduction side renders the 3D objects based on the acquired data of the 3D objects such that a 3D shape video is displayed on a viewing device of a viewer. The viewing device is composed of, for example, a liquid crystal display, a head mounted display, or the like.

Various formats can be adopted as a data format of 3D model data.

One of data formats is a format in which geometry information (shape information) of an object is represented by a set of points (point cloud) at the three-dimensional position of the object and color information of the object is held corresponding to each point. In this format, one piece of geometry information and color information are held for one object. This format is described as a point cloud format.

Another data format is a format in which geometry information of an object is represented by a set of points (point cloud) as in the aforementioned point cloud format or represented by a vertex called a polygon mesh and connection between vertexes, and color information of the object is held in a captured image (two-dimensional texture image) captured by each imaging device. In this format, one piece of geometry information and color information composed of the same number of captured images (two-dimensional texture images) as the number of imaging devices are held for one object. This format is referred to as a multi-texture geometry format.

Another data format is a format in which geometry information of an object is represented by polygon meshes and color information of the object is held corresponding to each polygon mesh. A two-dimensional texture image as color information attached to each polygon mesh is represented by a UV coordinate system. In this format, one piece of geometry information and color information composed of one two-dimensional texture image are held for one object. In the present embodiment, this format is described as a UV texture geometry format. The UV texture geometry format is a format standardized by MPEG-4 Animation Framework eXtension (AFX).

Another data format is a format in which geometry information of an object is represented by distance information corresponding to a captured image captured by each imaging device, and color information of the object is held in the captured image (two-dimensional texture image) captured by each imaging device. As the distance information corresponding to the captured image captured by each imaging device, a depth image in which a distance in the depth direction to a subject is stored as a depth value corresponding to each pixel of the captured image is employed. In this format, geometry information composed of the same number of depth images as the number of imaging devices and color information composed of the same number of captured images (two-dimensional texture images) as the number of imaging devices are held for one object. This format is described as a multi-texture depth format. The merit of the multi-texture depth format is that the AVC (Advanced Video Coding) method, HEVC (High Efficiency Video Coding) method, or the like can be used as they are as a coding method at the time of transmitting 3D model data, and thus high-efficiency compression can be achieved.

An arbitrary data format among the above-described various data formats of 3D model data may be adopted. A reproduction side may designate a data format or a distribution side may determine a data format. Further, a data format may be determined in advance for each application.

The reproduction side can request only a 3D object that is a viewing target among one or more 3D objects present in an imaging space and displays the 3D object on a viewing device. For example, the reproduction side assumes a virtual camera for which a viewing range of a viewer becomes an imaging range, requests only a 3D object captured by the virtual camera among a large number of 3D objects present in the imaging space, and displays the 3D object on the viewing device. The viewpoint (virtual viewpoint) of the virtual camera can be set to an arbitrary position such that the viewer can view a subject from any viewpoint in the real world. A background image representing a predetermined space is appropriately combined with the 3D object. The background image may be a still image having a fixed virtual viewpoint or may be an image that is changed depending on a virtual viewpoint, like a subject as a foreground image.

### <3. Configuration example of free viewpoint image generation device>

Fig. 2 is a block diagram showing a detailed configuration example of the free viewpoint image generation device 51.

The free viewpoint image generation device 51 includes a free viewpoint image generation unit 61, a free viewpoint image accumulation unit 62, a coding unit 63, a communication unit 64, and a user interface (IF) unit 65. The user IF unit 65 includes a display unit 81 and an operation unit 82.

The free viewpoint image generation device 51 can receive an operation of a user 91 via the user IF unit 65, execute processing according to an instruction of the user 91, and even when the user 91 instructs the free viewpoint image generation device 51 to perform predetermined processing via a terminal device 92, execute processing according to the instruction. The user 91 instructs a free viewpoint image that is a satellite image of a predetermined point (designated point) on the ground, viewed from a predetermined virtual viewpoint in the sky at a predetermined time (designated time), to be generated by inputting the instruction to the operation unit 82 directly or via the terminal device 92.

The free viewpoint image generation device 51 generates a satellite image of the designated point on the ground, viewed from the predetermined virtual viewpoint designated by the user at the designated time, by synthesizing a base image and a real-time image viewed from the predetermined virtual viewpoint in response to the instruction to generate a free viewpoint image from the user.

The base image viewed from the predetermined virtual viewpoint is a satellite image corresponding to a background image of the volumetric capture technology and is a satellite image of a stationary subject that does not change in a certain duration (regardless of change in a certain duration). The base image is an image with relatively little change as compared to the real-time image.

On the other hand, the real-time image viewed from the predetermined virtual viewpoint is a satellite image corresponding to a foreground image (subject) of the volumetric capture technology and is a satellite image of a dynamic subject (real-time subject) that changes in real time.

Dynamic subjects that change in real time (real-time subjects) are subjects that change in a certain duration other than stationary subjects included in the base image and include, for example, instantly changing subjects to subjects that change over several hours to about one day.

Dynamic subjects include, for example, moving objects such as airplanes, ships, vehicles, and people, meteorological phenomena such as clouds, aurora, and volcanic eruptions, reflection phenomena of the sun on the sea, lakes, rivers, and ground surfaces, ray information including colors of the sky of sunrises and sunsets, and shadows, and the like.

It is assumed that subjects that change over a duration of about one day or longer other than dynamic subjects are included in stationary subjects. For example, changes in the colors of mountains such as autumn leaves, a state immediately after planting rice fields, a state of rice ears during a harvest season, and the like can be regarded as a change of season, and thus forests and rice fields are included in stationary subjects.

The free viewpoint image generation unit 61 includes a base image generation unit 71, a real-time image generation unit 72, an external information acquisition unit 73, and an image synthesis unit 74.

The free viewpoint image generation unit 61 of the free viewpoint image generation device 51 is connected to a satellite image accumulation server 101 and an external information providing server 102 via a predetermined network. As the network between the free viewpoint image generation device 51 and the satellite image accumulation server 101 or the external information providing server 102, any communication network similar to the above-described network 12 can be adopted. Connection to the predetermined network is performed via the communication unit 64.

The free viewpoint image generation unit 61 generates a free viewpoint image of a predetermined point on the ground viewed from a predetermined virtual viewpoint in the sky based on a generation instruction from the control unit 66 and supplies the free viewpoint image to the free viewpoint image accumulation unit 62.

The base image generation unit 71 acquires a plurality of satellite images accumulated (stored) in the satellite image accumulation server 101 and captured from different viewpoints and generates a 3D model of a stationary subject on the ground using the acquired plurality of satellite images. Then, the base image generation unit 71 generates a first virtual viewpoint image when the 3D model of the stationary subject on the ground is viewed from a predetermined virtual viewpoint designated by the user 91 and supplies the first virtual viewpoint image to the image synthesis unit 74 as a base image.

The base image generation unit 71 can be used to generate the 3D model of the stationary subject on the ground after a dynamic subject included in the plurality of satellite images acquired from the satellite image accumulation server 101 is removed in advance. In other words, the base image generation unit 71 generates satellite images obtained by removing a subject to be included in a real-time image generated by the real-time image generation unit 72 from the satellite images acquired from the satellite image accumulation server 101, and can be used to generate the 3D model of the stationary subject on the ground. The dynamic subject included in the satellite images can be removed, for example, by comparing captured satellite images of the same point, detecting a non-matching subject as a dynamic subject, and removing the subject. Further, for example, it is possible to detect and remove minute changes as a dynamic subject using satellite images captured by a plurality of artificial satellites such as formation flights.

A plurality of satellite images obtained by imaging the ground from the sky by an artificial satellite equipped with an imaging device are accumulated in the satellite image accumulation server 101. The artificial satellite may be the satellite 21 of the satellite operating company that owns the satellite management device 11 or may be an artificial satellite of another company. The satellite image accumulation server 101 may be a server operated by the satellite operating company that owns the satellite management device 11, a server operated by the image providing company that owns the free viewpoint image generation device 51, or a server operated by another company. Further, the satellite image accumulation server 101 may be included in a part of the free viewpoint image generation device 51 as a satellite image accumulation unit and accumulate satellite images supplied from the satellite management device 11.

The satellite images accumulated in the satellite image accumulation server 101 are images obtained by imaging the ground from a plurality of viewpoints in the sky using one or a plurality of artificial satellites. In the case of imaging with one artificial satellite, a plurality of satellite images corresponding to a plurality of viewpoints are generated by imaging the ground in a time-division manner. When a plurality of artificial satellites are used, each artificial satellite can generate a large number of satellite images corresponding to a large number of viewpoints by imaging the ground in a time-division manner.

A satellite image accumulated in the satellite image accumulation server 101 may be a satellite image obtained by combining two satellite images captured by an artificial satellite into one. For example, one satellite image can be obtained by performing stitch processing on two satellite images having imaging areas that partially overlap. The two satellite images on which stitch processing is performed may be images having different resolutions.

Instead of the satellite images accumulated in the satellite image accumulation server 101, aerial images captured by an aircraft may be used.

It is desirable that the resolution of the satellite images accumulated in the satellite image accumulation server 101 be high because the accuracy of subsequent processing changes. For example, it is desirable that the ground resolution be 1 m or less, and when it is desired to identify a ground surface structure such as a vehicle, it is desirable that the resolution is 50 cm or less.

In addition to a satellite image as texture information, a depth image which is information on a depth to a stationary subject may also be accumulated in the satellite image accumulation server 101. The depth image can be generated from, for example, parallax information based on a plurality of satellite images obtained by capturing the same point from different viewpoints with a single or a plurality of satellites. Imaging by multiple satellites includes imaging by a formation flight. Further, the depth image may be generated from altitude measurement results obtained by a synthetic aperture radar satellite (SAR satellite). Alternatively, the depth image may be generated by estimation from a 2D satellite image, for example, by estimating height information on the basis of the size of a shadow reflected in a satellite image, and the like.

The satellite images accumulated in the satellite image accumulation server 101 can be accumulated for each of different conditions, such as different times such as morning, noon, afternoon, evening, and night, different types of weather such as fine, sunny, cloudy, and rainy, and seasons such as spring, summer, autumn, and winter. In this case, the base image generation unit 71 can generate a 3D model of a stationary subject on the ground for each condition for accumulation. When a satellite image under predetermined conditions has not been accumulated in the satellite image accumulation server 101, the base image generation unit 71 can perform estimation on the basis of a satellite image of the same point captured under other conditions to generate the satellite image that has not been accumulated and use it for processing of generating the 3D model of the stationary subject. For example, when an autumn satellite image has not been accumulated, the autumn satellite image may be estimated and generated from a summer or winter satellite image of the same point.

The satellite image accumulation server 101 may accumulate data of 3D models of stationary subjects on the ground generated by 3D modeling performed by other devices, instead of satellite images captured from a large number of viewpoints in the sky. In this case, the base image generation unit 71 acquires data of a 3D model of a stationary subject on the ground accumulated in the satellite image accumulation server 101 and generates a first virtual viewpoint image on the basis of the acquired data of the 3D model of the stationary subject on the ground. In other words, when the 3D model data of the stationary subject on the ground is accumulated in the satellite image accumulation server 101, 3D modeling processing is omitted.

The data format of 3D models of stationary subjects on the ground accumulated in the satellite image accumulation server 101 may be any of the above-mentioned data formats of 3D model data. The data format when the base image generation unit 71 generates a 3D model of a stationary subject on the ground may be any format.

Since a base image is a satellite image of a stationary subject that does not affect a designated time of a free viewpoint image designated by the user 91, the satellite images accumulated in the satellite image accumulation server 101 can be satellite images captured about one week to one month before the designated time of the free viewpoint image designated by the user 91. Alternatively, the satellite images accumulated in the satellite image accumulation server 101 may be satellite images captured after the designated time of the free viewpoint image designated by the user 91 (in the future).

Rather than a satellite image acquired from the satellite image accumulation server 101, a satellite image obtained by capturing the same point and having a new imaging time or a satellite image with a high resolution may be supplied from the real-time image generation unit 72. When a more recent satellite image or a satellite image with a higher resolution is supplied from the real-time image generation unit 72, the base image generation unit 71 can update a 3D model of a stationary subject on the ground using the satellite image and generate a base image.

The real-time image generation unit 72 acquires a plurality of satellite images that correspond to a designated point and a designated time designated by the user 91 as a point and a time at which a free viewpoint image will be generated and have been captured from different viewpoints from satellite management device 11. The plurality of satellite images of the different viewpoints corresponding to the designated time are referred to as real-time satellite images to distinguish them from satellite images used to generate a base image.

The real-time image generation unit 72 supplies a designated point and a designated time of a free viewpoint image to the satellite management device 11 and acquires a plurality of satellite images (real-time satellite images) obtained by capturing the designated point at the designated time from different viewpoints. The satellite management device 11 transmits an imaging instruction from the communication device 13 to a satellite 21 passing through the designated point in proximity to the designated time supplied from the real-time image generation unit 72 and causes the satellite 21 to capture an image. The proximity to the designated time may be a time including an error of several minutes to several tens of minutes. The satellite management device 11 or the real-time image generation unit 72 may change a captured satellite image to an image in which change according to the time error has been estimated. For example, if an airplane flying at a predetermined time at a predetermined point is imaged as a dynamic subject, and the time has an error with respect to a designated time, the image may be changed to a satellite image in which the position of the airplane has been moved by the time error.

A plurality of satellite images from different viewpoints may be captured by one satellite 21 in a time-division manner or may be captured by a plurality of satellites 21 having different orbits from their viewpoints. Alternatively, a plurality of satellites 21 having the same orbit or a plurality of satellites 21 operated in a formation flight may capture satellite images with a time difference of about several minutes to several tens of minutes. Regarding satellite images with a time difference of several minutes to several tens of minutes, on the basis of a satellite image at a time closest to a designated time, other satellite images may be changed to images in which changes according to the time error have been estimated.

The real-time image generation unit 72 extracts a dynamic subject on the ground from each of the acquired plurality of real-time satellite images. Extraction of a dynamic subject on the ground can be achieved, for example, by a difference from a base image of the same viewpoint. Further, since clouds, airplanes, ships, vehicles, and the like have characteristic shapes and colors, a dynamic subject may be extracted according to image recognition processing based on these characteristics. Alternatively, a dynamic subject may be extracted using the same processing as processing of removing a dynamic subject performed by the base image generation unit 71.

The real-time image generation unit 72 generates a 3D model of the dynamic subject from each of real-time satellite images including only the extracted dynamic subject on the ground. Then, the real-time image generation unit 72 generates a second virtual viewpoint image when the 3D model of the dynamic subject is viewed from a predetermined virtual viewpoint designated by the user 91 as a real-time image of the dynamic subject and supplies the second virtual viewpoint image to the image synthesis unit 74.

The real-time image generation unit 72 may generate 3D information on the basis of a parallax image calculated from a plurality of satellite images obtained by capturing a designated point from different viewpoints instead of generating the 3D model of the dynamic subject. Alternatively, the real-time image generation unit 72 may generate 3D information according to estimation using only a 2D satellite image without calculating the depth information instead of generating the 3D model of the dynamic subject. For example, an airplane may be extracted as a dynamic subject from a 2D satellite image, and 3D information of the dynamic subject may be generated from the flight altitude of the airplane as known information.

The data format when the real-time image generation unit 72 generates a 3D model of a dynamic subject may be any of the above-mentioned data formats of 3D model data. If a 3D model is not formed, only 2D satellite images are stored in an internal memory.

When a real-time satellite image has been acquired from the satellite management device 11, the real-time image generation unit 72 can supply the acquired real-time satellite image to the base image generation unit 71 as an update satellite image for updating the satellite image of the same point.

If there is a satellite 21 passing through a designated point in proximity to a designated time supplied from the real-time image generation unit 72, the satellite 21 may be caused to perform imaging, but in reality, there may be no satellite 21 passing through the designated point in proximity to the designated time. In such a case, the real-time image generation unit 72 generates a real-time image of the dynamic subject using external information acquired by the external information acquisition unit 73 from the external information providing server 102 and supplies the real-time image to the image synthesis unit 74.

When a dynamic subject is a moving object such as an airplane, a ship, a vehicle, or a person, position information of the moving object at a designated time is acquired from the external information providing server 102 on the basis of information on a designated point and a designated time of a free viewpoint image. Regarding a ship, an airplane, or the like, for example, position information of the moving object at a designated time can be acquired by obtaining automatic identification system (AIS) information from the external information providing server 102. Regarding a vehicle or a person, position information of the moving object at a designated time can be acquired by obtaining position information of a device mounted on the vehicle or the person and position information detected by a monitoring camera installed on the ground from the external information providing server 102. Position information of various moving objects may be acquired from the external information providing server 102 operated by an operating company that provides position information of moving objects.

The real-time image generation unit 72 generates a real-time image of a dynamic subject by acquiring a known 3D model or texture information of a moving object from an external company or generating it in its own company, internally storing it in advance, and disposing a 2D image of the moving object at a predetermined position on the basis of position information of the moving object acquired through the external information acquisition unit 73, and supplies the real-time image to the image synthesis unit 74.

When a dynamic subject is a meteorological phenomenon such as a cloud distribution, it is possible to generate a real-time image of the cloud distribution by acquiring information indicating the cloud distribution and estimated altitude information from the external information providing server 102 operated by a meteorological service company that provides meteorological information and disposing a 2D image of clouds at the estimated altitude. Further, when a dynamic subject is a reflection phenomenon of the sun, for example, it is possible to generate a real-time image of ray information such as shadows and reflection of the sun by acquiring information such as a sun position from the external information providing server 102 operated by a meteorological service company, estimating ray information and the like, and disposing the estimated information at a predetermined position.

Although Fig. 2 illustrates only one external information providing server 102 for convenience of description, the external information acquisition unit 73 can acquire desired external information by accessing external information providing servers 102 of different external information providing companies or different places according to types of external information to be acquired.

Although methods of generating a real-time image of a dynamic subject by the real-time image generation unit 72 in a case where a satellite image corresponding to a point and a time designated by the user 91 can be captured and a case where the satellite image cannot be captured have been described above, intermediate cases between the cases may be present in reality. That is, there is a case in which a satellite image of a designated point having an error range of several tens of minutes with respect to a time designated by the user 91 cannot be captured, but satellite images of the designated point 1 hour ago, 3 hours ago, 6 hours ago, and within an error range of several hours can be acquired.

In this case, the real-time image generation unit 72 acquires a plurality of satellite images captured at a time within an error range of a predetermined time with respect to a time designated by the user 91 from different viewpoints from the satellite management device 11. A plurality of satellite images of different viewpoints corresponding to a time within an error range of a predetermined time with respect to a designated time are referred to as quasi-real-time satellite images to distinguish them from satellite images used to generate a base image and real-time satellite images. Although an error range of several hours with respect to a designated time is an error range assumed in operation of a constellation, an error range with respect to a designated time of quasi-real-time satellite images is set to a maximum of one day on the assumption of an observation satellite with one return day.

The real-time image generation unit 72 extracts a dynamic subject on the ground from each of acquired plurality of quasi-real-time satellite images and generates a 3D model of the dynamic subject. Extraction of the dynamic subject and generation of the 3D model of the dynamic subject are the same as in the case of the above-described real-time satellite image.

Next, the real-time image generation unit 72 estimates a 3D model of the dynamic subject at the designated time using external information about the dynamic subject acquired from the external information providing server 102 via the external information acquisition unit 73 from the generated 3D model of the dynamic subject. For example, the real-time image generation unit 72 acquires position information of an airplane or a ship as external information and moves a 3D model of the moving object to a position based on the external information. Further, for example, the real-time image generation unit 72 acquires cloud distribution information as external information and moves a 3D model of clouds to a position based on the external information. Then, the real-time image generation unit 72 generates a second virtual viewpoint image when the 3D model of the dynamic subject at the designated time estimated on the basis of the external information is viewed from a predetermined virtual viewpoint designated by the user 91 as a real-time image of the dynamic subject and supplies the real-time image to the image synthesis unit 74.

Alternatively, the real-time image generation unit 72 generates a quasi-real-time image of the dynamic subject when the 3D model of the dynamic subject generated from the acquired plurality of quasi-real-time satellite images is viewed from a predetermined virtual viewpoint designated by the user 91. Then, the real-time image generation unit 72 estimates and generates a real-time image of the dynamic subject using the generated quasi-real-time image of the dynamic subject and the external information about the dynamic subject acquired from the external information providing server 102 via the external information acquisition unit 73. For example, a quasi-real-time image that is a texture image of an airplane or a ship two hours ago is changed to a position at a designated time based on external information and is used as a real-time image of the moving object at the designated time. A quasi-real-time image that is a texture image of clouds two hours ago is changed on the basis of information on the clouds at a designated time based on external information, and thus a real-time image of the clouds at the designated time is generated.

That is, when a quasi-real-time satellite image is acquired, a real-time image of a dynamic subject is generated according to cooperation (mutual supplementation) of both a method of acquiring a real-time satellite image to generate a real-time image of a dynamic subject and a method of generating a real-time image of a dynamic subject using only external information.

Even when a real-time satellite image corresponding to a time designated by the user 91 can be acquired, a quasi-real-time satellite image may also be used. By using a real-time satellite image and a quasi-real-time satellite image together, the following effects can be obtained. As one effect, even an image with a small amount of information on a real-time satellite image captured at a designated time can be permitted. For example, by using both a real-time satellite image and a quasi-real-time satellite image, the resolution of the real-time satellite image captured at a designated time may be low, and the imaging range can be extended for the low resolution. It is possible to use different types of satellites 21 as a satellite 21 for capturing a real-time satellite image and a satellite 21 for capturing a quasi-real-time satellite image, and thus there is room for preparing a plurality of types of satellites 21. On the basis of difference information between a real-time satellite image and a quasi-real-time satellite image, it is also possible to supplement information therebetween such as change in clouds in the time period therebetween.

In addition, the real-time image generation unit 72 may estimate ray information as a dynamic subject using a base image that can be generated by the base image generation unit 71 and generate a real-time satellite image of the ray information. For example, the base image generation unit 71 can generate a 3D model of a stationary subject under each condition, such as each of different times such as morning, noon, and night, each of fine weather and sunny weather, or each season such as spring, summer, autumn, or winter to generate a base image of each condition. The real-time image generation unit 72 can detect change in ray information in the base image of each condition generated from the 3D model of the stationary subject under each condition and generate a real-time satellite image based on a time, season, and weather designated by the user 91 according to estimation. The real-time satellite image may be estimated using a quasi-real-time satellite image or an incomplete real-time satellite image. The incomplete real-time satellite image is, for example, a panchromic image (monochrome image) or a low-resolution image. Texture information representing shadows and colors of a moving object can also be estimated using a base image like ray information.

The image synthesis unit 74 synthesizes a base image supplied from the base image generation unit 71 and a real-time satellite image supplied from the real-time image generation unit 72 to generate a free viewpoint image of a designated point on the ground viewed at a time designated by the user 91 and supplies the free viewpoint image to the free viewpoint image accumulation unit 62. In the image synthesis unit 74, a real-time image corresponding to a foreground image (subject) of the volumetric capture technology is superimposed on a base image corresponding to a background image of the volumetric capture technology.

The free viewpoint image accumulation unit 62 accumulates the free viewpoint image supplied from the image synthesis unit 74. The free viewpoint image accumulation unit 62 can accumulate free viewpoint images of various virtual viewpoints, designated times, and designated points generated by the free viewpoint image generation unit 61, select a designated free viewpoint image in response to an instruction from the control unit 66, and supply the selected free viewpoint image to the coding unit 63 or the display unit 81.

The coding unit 63 encodes the free viewpoint image supplied from the free viewpoint image accumulation unit 62 using a predetermined coding method such as an advanced video coding (AVC) method or a high efficiency video coding (HEVC) method. Encoded free viewpoint image coding data is supplied to the communication unit 64.

The communication unit 64 communicates with a terminal device 29 via a predetermined network. When the terminal device 92 supplies a generation instruction for generating a free viewpoint image of a predetermined virtual viewpoint, a designated time, and a designated point, the communication unit 64 supplies the generation instruction to the control unit 66. The communication unit 64 transmits a free viewpoint image coding data supplied from the coding unit 63 to the terminal device 92 in response to the generation instruction. Further, the communication unit 64 transmits a satellite image capture request to the satellite management device 11 under the control of the control unit 66. The communication unit 64 also communicates with the satellite image accumulation server 101 and the external information providing server 102 under the control of the control unit 66.

The display unit 81 is configured as, for example, a liquid crystal display (LCD) or an organic electroluminescence (EL) display. The display unit 81 displays a free viewpoint image supplied from the free viewpoint image accumulation unit 62.

The operation unit 82 is configured as, for example, a keyboard, a mouse, a touch panel, or the like, receives an operation of the user 91, and supplies a generation instruction for generating a free viewpoint image of a virtual viewpoint, a designated time, and a designated point designated by the user 91 to the control unit 66.

The control unit 66 controls the operation of the entire free viewpoint image generation device 51. For example, the control unit 66 supplies an instruction for generating a free viewpoint image of a predetermined point on the ground viewed from a predetermined virtual viewpoint in the sky designated by the user 91 at a predetermined time on the basis of a generation instruction from the communication unit 64 or the user IF unit 65 to the free viewpoint image generation unit 61. Further, when it is necessary to capture a satellite image necessary to generate the free viewpoint image, the control unit 66 causes the communication unit 64 to transmit a satellite image capture request to the satellite management device 11. In addition, the control unit 66 supplies the free viewpoint image accumulated in the free viewpoint image accumulation unit 62 to the coding unit 63 or the display unit 81.

The terminal device 92 is configured as, for example, a smartphone, a tablet terminal, a mobile phone, a personal computer, or the like, and receives an operation of the user 91. When the user 91 instructs the free viewpoint image generation device 51 to generate a free viewpoint image via the terminal device 92, the terminal device 92 transmits the generation instruction to the free viewpoint image generation device 51. Further, the terminal device 92 receives free viewpoint image coding data transmitted from the free viewpoint image generation device 51 in response to the generation instruction, performs decoding processing corresponding to the coding method, and displays the free viewpoint image on a display device (not shown). The user can confirm the free viewpoint image from any place (remotely) using the terminal device 92 owned by the user.

### <4. Free viewpoint image generation processing>

Next, free viewpoint image generation processing executed by the free viewpoint image generation device 51 will be described with reference to the flowchart of Fig. 3. This processing starts, for example, when the user 91 performs an operation of instructing for generating a free viewpoint image of a predetermined designated point on the ground viewed from a predetermined virtual viewpoint in the sky at a predetermined designated time through the terminal device 92.

First, in step S1, the control unit 66 transmits a request for capturing a satellite image corresponding to the predetermined virtual viewpoint, the designated time, and the designated point to the satellite management device 11 via the communication unit 64 on the basis of the generation instruction from the terminal device 92. Further, the control unit 66 supplies the instruction for generating a free viewpoint image of the predetermined point on the ground viewed from the predetermined virtual viewpoint in the sky designated by the user 91 at the predetermined time to the free viewpoint image generation unit 61.

In step S2, the base image generation unit 71 acquires a plurality of satellite images captured from different viewpoints and accumulated in the satellite image accumulation server 101 and removes a dynamic subject included in each of the plurality of satellite images.

In step S3, the base image generation unit 71 generates a 3D model of a stationary subject on the ground using the plurality of satellite images from which the dynamic subject has been removed. Then, in step S4, the base image generation unit 71 generates a first virtual viewpoint image when the generated 3D model of the stationary subject is viewed from the predetermined virtual viewpoint designated by the user 91 as a base image and supplies the first virtual viewpoint image to the image synthesis unit 74.

In step S5, the real-time image generation unit 72 determines whether a plurality of real-time satellite images that are satellite images corresponding to the designated point and the designated time designated by the user 91 and have been captured from different viewpoints can be acquired from the satellite management device 11 at the request for capturing in step S1.

If it is determined that the plurality of real-time satellite images captured from different viewpoints can be acquired in step S5, processing proceeds to step S6, and the real-time image generation unit 72 extracts a dynamic subject from each of the acquired plurality of real-time satellite images.

In step S7, the real-time image generation unit 72 generates a 3D model of the dynamic subject from each of real-time satellite images including only the extracted dynamic subject on the ground. Then, in step S8, the real-time image generation unit 72 generates a second virtual viewpoint image when the 3D model of the dynamic subject is viewed from the predetermined virtual viewpoint designated by the user 91 as a real-time image of the dynamic subject and supplies the second virtual viewpoint image to the image synthesis unit 74.

On the other hand, if it is determined that the plurality of real-time satellite images captured from different viewpoints cannot be acquired in step S5, processing proceeds to step S9 in which the real-time image generation unit 72 determines whether a plurality of quasi-real-time satellite images that are satellite images captured at a time within an error range of a predetermined time with respect to the designated time designated by the user 91 and have been captured from different viewpoints can be acquired from the satellite management device 11.

If it is determined that the plurality of quasi-real-time satellite images captured from different viewpoints can be acquired from the satellite management device 11 in step S9, processing proceeds to step S10, and the real-time image generation unit 72 extracts the dynamic subject from each of the acquired plurality of quasi-real-time satellite images and generates a 3D model of the dynamic subject from each of quasi-real-time satellite images including only the extracted dynamic subject on the ground.

In step S11, the real-time image generation unit 72 acquires external information about the dynamic subject from the external information providing server 102 via the external information acquisition unit 73.

In step S12, the real-time image generation unit 72 estimates a 3D model of the dynamic subject at the designated time from the generated 3D model of the dynamic subject using the acquired external information about the dynamic subject.

In step S13, the real-time image generation unit 72 generates a second virtual viewpoint image when the estimated 3D model of the dynamic subject at the designated time is viewed from the predetermined virtual viewpoint designated by the user 91 as a real-time image of the dynamic subject and supplies the second virtual viewpoint image to the image synthesis unit 74.

On the other hand, if it is determined that the plurality of quasi-real-time satellite images captured from different viewpoints cannot be acquired from the satellite management device 11 in step S9, processing proceeds to step S14, and the real-time image generation unit 72 acquires external information about the dynamic subject from the external information providing server 102 via the external information acquisition unit 73.

In step S15, the real-time image generation unit 72 generates a real-time image of a dynamic subject using the acquired external information and supplies it to the image synthesis unit 74.

In step S16, the image synthesis unit 74 synthesizes the base image supplied from the base image generation unit 71 and the real-time satellite image supplied from the real-time image generation unit 72 to generate a free viewpoint image of a designated point on the ground viewed at a time designated by the user 91 and supplies the free viewpoint image to the free viewpoint image accumulation unit 62.

In step S17, the free viewpoint image accumulation unit 62 accumulates a free viewpoint image supplied from the image synthesis unit 74 and supplies the free viewpoint image supplied from the image synthesis unit 74 to the coding unit 63 according to the control of the control unit 66.

In step S18, the coding unit 63 encodes the free viewpoint image supplied from the free viewpoint image accumulation unit 62 using a predetermined coding method, and the communication unit 64 transmits encoded free viewpoint image coding data to the terminal device 92. The free viewpoint image based on the free viewpoint image coding data is displayed on the terminal device 92.

Processing of steps S17 and S18 is changed to processing of supplying the free viewpoint image supplied from the image synthesis unit 74 to the display unit 81 and displaying the free viewpoint image on the display unit 18 when a generation instruction is supplied from the operation unit 82.

In this manner, free viewpoint image generation processing ends.

In the above-described free viewpoint image generation processing, processing of steps S2 and S3 for generating the 3D model of the stationary subject does not affect the real-time situation at a predetermined time and point designated by the user 91, and thus can be executed in advance at a timing different from free viewpoint image generation processing of Fig. 3.

In the above-described free viewpoint image generation processing, when a plurality of real-time satellite images corresponding to a designated point and a designated time designated by the user 91 can be acquired from the satellite management device 11, the free viewpoint image generation unit 61 generates a 3D model of a dynamic subject using the acquired plurality of real-time satellite images. Conditions for obtaining a plurality of real-time satellite images corresponding to a designated point and a designated time are limited to a certain period of time during which the satellite 21 passes over the designated point, and the most desirable condition is about 10 minutes near the designated time with respect to the designated time if the satellite 21 is a low-orbit satellite, but it is about 1 hour including 30 minutes before and after the designated time if a range that can be estimated from the captured satellite images depending on a time error is included.

On the other hand, a plurality of real-time satellite images cannot be acquired in a time period of an error range of several hours which exceeds a time range of about one hour with respect to a designated point and a designated time, and a real-time image of a dynamic subject is generated on the basis of a plurality of quasi-real-time satellite images. In this case, there are a first estimation method of estimating a 3D model of a temporary dynamic subject and generating a real-time image of the dynamic subject, and a second estimation method of generating a quasi-real-time image of the temporary dynamic subject and estimating a real-time image of the dynamic subject. More specifically, in the first estimation method, the free viewpoint image generation unit 61 generates a 3D model of a dynamic subject from a plurality of quasi-real-time satellite images within an error range of several hours from a designated time and estimates a 3D model of the dynamic subject at the designated time using external information to generate a real-time image of the dynamic subject. In the second estimation method, the free viewpoint image generation unit 61 generates a 3D model of a temporary dynamic subject from a plurality of quasi-real-time satellite images within the error range of several hours from the designated time, generates a quasi-real-time image of the dynamic subject from a virtual viewpoint designated by the user 91 using the 3D model of the temporary dynamic subject, and estimates and generates a real-time image of the dynamic subject from the quasi-real-time image of the dynamic subject using external information.

Further, in a time period in which even a quasi-real-time satellite image cannot be acquired, a real-time image of the dynamic subject is generated using real-time external information acquired from the external information providing server 102 and the known information about the dynamic subject. For example, a real-time image of a dynamic subject is generated on the basis of position information (AIS information) of an airplane acquired in real time and texture information generated from a known 3D model of the airplane. In order to generate a 3D model of a dynamic subject, a plurality of real-time satellite images or quasi-real-time satellite images are required, but when a 2D satellite image is used as real-time external information, one satellite image may be required.

A dynamic subject may be identified or a real-time image may be generated by appropriately combining a real-time satellite image, a quasi-real-time satellite image, or external information which can be acquired without dividing cases into three of a case in which a real-time satellite image can be acquired (steps S6 to S8), a case in which a quasi-real-time satellite image can be acquired (steps S10 to S13), and a case in which any of a real-time satellite image and a quasi-real-time satellite image cannot be acquired (steps S14 and S15) as in free viewpoint image generation processing of Fig. 3. As described above, for example, an effect that a real-time satellite image having a low resolution and a wide imaging range can also be permitted, and the like can be obtained by using a real-time satellite image and a quasi-real-time satellite image in combination.

A real-time satellite image corresponding to a designated point and a designated time, a quasi-real-time satellite image, real-time external information acquired from the external information providing server 102, and known information about a dynamic subject for generating a real-time image of the dynamic subject can be dynamic subject identification information that identifies the dynamic subject.

The free viewpoint image generation unit 61 generates a free viewpoint image of a predetermined point on the ground viewed from a predetermined virtual viewpoint in the sky using a 3D model of a stationary subject generated using a satellite image captured by the satellite 21 and dynamic subject identification information that identifies a dynamic subject. Accordingly, it is possible to observe any point on the ground from a free viewpoint (virtual viewpoint) in the sky at any time.

It is expected that a situation in which the number of satellites 21 capable of performing imaging at a designated point and a designated time designated by the user 91 is small will be resolved according to increase in the number of operating satellites and development of communication technology for inter-satellite communication.

In addition, when the user 91 reserves and designates a predetermined point and time ahead to a certain extent and desires a satellite image viewed from a predetermined virtual viewpoint, the free viewpoint image generation device 51 can request the satellite management device 11 that it will operate the satellite 21 such that the satellite 21 passes over the designated point at the designated time and control the satellite management device 11 such that it performs pre-deployment of the satellite 21 that will perform imaging and orbit transition instruction for the satellite 21 in advance. Accordingly, the free viewpoint image generation device 51 can acquire a satellite image at a predetermined point and time, and the user 91 can observe a free viewpoint image. The free viewpoint image generation device 51 may acquire orbit information on the satellite 21 from the satellite management device 11 or the like and present points and times at which free viewpoint images can be generated to the user 91, and the user 91 may select a point and a time therefrom and observe a free viewpoint image.

A part of processing executed by the free viewpoint image generation device 51 can be performed by the satellite 21.

For example, the satellite 21 has the real-time image generation function executed by the real-time image generation unit 72, generates a real-time image viewed from a predetermined virtual viewpoint at a designated point and a designated time of the user 91, and downlinks the real-time image. When a real-time image is obtained by extracting a dynamic subject on the ground according to a difference from a base image of the same viewpoint, it is necessary to accumulate the base image in the satellite 21. The free viewpoint image generation device 51 acquires a real-time image generated by the satellite 21 via the satellite management device 11 and combines it with a base image generated by itself to generate a free viewpoint image. In this case, the amount of data required to generate a real-time image to be transmitted from the satellite 21 to the ground station 15 can be reduced. Generation of a real-time image may be performed by the free viewpoint image generation device 51 on the ground by downlinking a 3D model of a dynamic subject from the satellite 21 to the ground station 15. In this case, the amount of downlink data required to generate a real-time image can also be reduced.

### <5. Application examples>

The above-described satellite image processing system 1 can be applied to the following applications.

### • Checking of free viewpoint of landmark

It is possible to enjoy a viewpoint from space by generating a free viewpoint image of a user's travel destination or a situation of passing a landmark (for example, Mt. Fuji) on an airplane.

### • Checking of wide area such as disaster area

It is possible to confirm a situation of a disaster area or a conflict area by generating a free viewpoint image of the disaster area or the conflict area.

### • Satellite image with three-dimensional effect

It is possible to view a natural image with a three-dimensional effect even from a macro viewpoint by presenting a satellite image for satellite remote sensing for observing a situation of a target area or object and detecting change in the situation as a free viewpoint image.

### • Advanced meteorological observation

It is possible to perform more advanced analysis of meteorological phenomena such as clouds by three-dimensionally checking the meteorological phenomena from a free viewpoint using free viewpoint images. In addition, it is possible to use analysis results for advanced weather forecast and the like.

### • Ascertainment of growing states of agricultural products and trees

It is possible to present growing states of agricultural products and trees as 3D visual data using free viewpoint images. It is possible to perform more diversified analysis due to free viewpoints.

### • City planning

It is possible to three-dimensionally observe a situation of a city using free viewpoint images. In particular, it is possible to observe real-time changes. In this case, change points in the city may be visualized by highlighting changed parts with respect to a base image. It is possible to ascertain real-time information (movement status of vehicles, conductors, etc.) in proximity to a specific time from multiple viewpoints.

### • Ascertainment of states of construction sites

It is possible to three-dimensionally ascertain states of facilities in remote areas using free viewpoint images. Facilities include constructions such as houses and buildings, dams, petrochemical complexes, factories, harbors, and the like. In addition, it is possible to three-dimensionally ascertain land maintenance states such as leveling using free viewpoint images. In this case, change points in the city may be visualized by highlighting changed parts with respect to a base image. It is possible to ascertain real-time information (movement status of vehicles, conductors, etc.) in proximity to a specific time from multiple viewpoints.

In addition, an application that associates a free viewpoint image that can be generated by the satellite image processing system 1 with an image captured by another imaging device is also conceivable. For example, a system capable of switching images from a free viewpoint image generated by the free viewpoint image generation device 51 to an image captured from a short distance in the sky is conceivable. When a user checks a free viewpoint image as a macro image of a target point and performs a zooming operation on a part of the free viewpoint image, the user can simultaneously check a detailed image of a part of the free viewpoint image by associating the free viewpoint image with images captured from a short distance in the sky such that the free viewpoint image is switched to images captured by a monitoring camera in a city or a drone.

### <6. Configuration example of computer>

The series of processing executed by the free viewpoint image generation device 51 can be executed by hardware or software. When the series of processing is performed by software, a program constituting the software is installed in a computer. Here, the computer includes a microcomputer which is embedded in dedicated hardware or, for example, a general-purpose personal computer capable of executing various functions by installing various programs.

Fig. 4 is a block diagram showing a hardware configuration example of a computer that executes the series of processing executed by the free viewpoint image generation device 51.

In the computer, a central processing unit (CPU) 301, a read-only memory (ROM) 302, and a random access memory (RAM) 303 are connected to each other by a bus 304.

An input/output interface 305 is further connected to the bus 304. An input unit 306, an output unit 307, a storage unit 308, a communication unit 309, and a drive 310 are connected to the input/output interface 305.

The input unit 306 is, for example, a keyboard, a mouse, a microphone, a touch panel, or an input terminal. The output unit 307 is, for example, a display, a speaker, or an output terminal. The storage unit 308 is, for example, a hard disk, a RAM disc, or a nonvolatile memory. The communication unit 309 is a network interface or the like. The drive 310 drives a removable recording medium 311 such as a magnetic disk, an optical disc, a magneto-optical disc, or a semiconductor memory.

In the computer that has the foregoing configuration, the CPU 301 performs the above-described series of processing, for example, by loading a program stored in the storage unit 308 on the RAM 303 via the input/output interface 305 and the bus 304 and executing the program. In the RAM 303, data or the like necessary for the CPU 301 to perform various kinds of processing is also appropriately stored.

The program executed by the computer (the CPU 301) can be recorded on, for example, the removable recording medium 311 serving as a package medium for supply. The program can be supplied via a wired or wireless transmission medium such as a local area network, the Internet, or digital satellite broadcasting.

In the computer, by mounting the removable recording medium 311 on the drive 310, it is possible to install the program in the storage unit 308 via the input/output interface 305. The program can be received by the communication unit 309 via a wired or wireless transfer medium to be installed in the storage unit 308. In addition, the program can be installed in advance in the ROM 302 or the storage unit 308.

It is noted that, in the present description, the steps having been described in the flowcharts may be carried out in parallel or with necessary timing, for example, when evoked, even if the steps are not executed in time series along the order having been described therein, as well as when the steps are executed in time series.

In the present specification, the system means a set of a plurality of constituent elements (devices, modules (components), or the like) and all the constituent elements may be included or not included in the same casing. Accordingly, a plurality of devices accommodated in separate casings and connected via a network and one device in which a plurality of modules are accommodated in one casing may all be a system.

The embodiments of the present technology are not limited to the above-described embodiments, and various changes can be made without departing from the gist of the present technology.

For example, a combination of all or part of the above-mentioned plurality of embodiments may be employed.

For example, the present technology can have a configuration of cloud computing in which one function is shared by a plurality of devices via a network and processed jointly.

In addition, each step described in the above flowchart can be executed by one device or shared by a plurality of devices.

Further, in a case in which one step includes a plurality of processes, the plurality of processes included in the one step can be executed by one device or shared and executed by a plurality of devices.

The effects described in the present specification are merely examples and are not limited, and there may be effects other than those described in the present specification.

The present technology can employ the following configurations.
(1) An image generation device including an image generation unit that generates a free viewpoint image of a predetermined point on the ground viewed from a predetermined virtual viewpoint in the sky using a 3D model of a stationary subject generated using a satellite image captured by an artificial satellite and dynamic subject identification information that identifies a dynamic subject.
(2) The image generation device according to (1), wherein the image generation unit generates the free viewpoint image by generating the 3D model of the stationary subject using a base image viewed from the predetermined virtual viewpoint in the sky as a background image, generating a real-time image viewed from the predetermined virtual viewpoint in the sky as a foreground image, and synthesizing the base image and the real-time image.
(3) The image generation device according to (2), wherein the image generation unit uses a 3D model of the dynamic subject as the dynamic subject identification information.
(4) The image generation device according to (3), wherein the image generation unit generates the real-time image of the 3D model of the dynamic subject viewed from the predetermined virtual viewpoint in the sky as the foreground image.
(5) The image generation device according to (3) or (4), wherein the image generation unit generates the 3D model of the dynamic subject using a real-time satellite image captured by the artificial satellite in proximity to a time designated by a user.
(6) The image generation device according to (5), wherein the image generation unit extracts the dynamic subject from the real-time satellite image and generates the 3D model of the dynamic subject from the extracted image.
(7) The image generation device according to (3), wherein the image generation unit generates a 3D model of a temporary dynamic subject using a quasi-real-time satellite image captured by the artificial satellite at a time different from a time designated by a user by several hours and estimates a 3D model of the dynamic subject at the time designated by the user from the 3D model of the temporary dynamic subject to generate the real-time image using external information.
(8) The image generation device according to (3), wherein the image generation unit generates a 3D model of a temporary dynamic subject using a quasi-real-time satellite image captured by the artificial satellite at a time different from a time designated by a user by several hours, generates a quasi-real-time image of the dynamic subject obtained when the 3D model of the temporary dynamic subject is viewed from the predetermined virtual viewpoint in the sky, and generates the real-time image from the quasi-real-time image of the dynamic subject using external information.
(9) The image generation device according to (7) or (8), wherein the image generation unit extracts the dynamic subject from the quasi-real-time satellite image and generates the 3D model of the temporary dynamic subject from the extracted image.
(10) The image generation device according to (2), wherein the image generation unit uses real-time external information and known information about the dynamic subject as the dynamic subject identification information.
(11) The image generation device according to any one of (1) to (10), wherein the image generation unit generates the 3D model of the stationary subject using an image from which a dynamic subject included in the satellite image captured by the artificial satellite has been removed.
(12) An image generation method including generating, by an image generation device, a free viewpoint image of a predetermined point on the ground viewed from a predetermined virtual viewpoint in the sky using a 3D model of a stationary subject generated using a satellite image captured by an artificial satellite and dynamic subject identification information that identifies a dynamic subject.
(13) A program for causing a computer to serve as an image generation unit that generates a free viewpoint image of a predetermined point on the ground viewed from a predetermined virtual viewpoint in the sky using a 3D model of a stationary subject generated using a satellite image captured by an artificial satellite and dynamic subject identification information that identifies a dynamic subject.

### [Reference Signs List]

- 1: Satellite image processing system
- 11: Satellite management device
- 21: Satellite
- 51: Free viewpoint image generation device
- 61: Free viewpoint image generation unit
- 62: Free viewpoint image accumulation unit
- 63: Coding unit
- 65: User IF unit
- 66: Control unit
- 71: Base image generation unit
- 72: Real-time image generation unit
- 73: External information acquisition unit
- 74: Image synthesis unit
- 101: Satellite image accumulation server
- 102: External information providing server
- 301: CPU
- 302: ROM
- 303: RAM
- 306: Input unit
- 307: Output unit
- 308: Storage unit
- 309: Communication unit
- 310: Drive

## Claims

1. An image generation device comprising an image generation unit that generates a free viewpoint image of a predetermined point on the ground viewed from a predetermined virtual viewpoint in the sky using a 3D model of a stationary subject generated using a satellite image captured by an artificial satellite and dynamic subject identification information that identifies a dynamic subject.

2. The image generation device according to claim 1, wherein the image generation unit generates the free viewpoint image by generating the 3D model of the stationary subject using a base image viewed from the predetermined virtual viewpoint in the sky as a background image, generating a real-time image viewed from the predetermined virtual viewpoint in the sky as a foreground image using the dynamic subject identification information, and synthesizing the base image and the real-time image.

3. The image generation device according to claim 2, wherein the image generation unit uses a 3D model of the dynamic subject as the dynamic subject identification information.

4. The image generation device according to claim 3, wherein the image generation unit generates the real-time image of the 3D model of the dynamic subject viewed from the predetermined virtual viewpoint in the sky as the foreground image.

5. The image generation device according to claim 3, wherein the image generation unit generates the 3D model of the dynamic subject using a real-time satellite image captured by the artificial satellite in proximity to a time designated by a user.

6. The image generation device according to claim 5, wherein the image generation unit extracts the dynamic subject from the real-time satellite image and generates the 3D model of the dynamic subject from the extracted image.

7. The image generation device according to claim 3, wherein the image generation unit generates a 3D model of a temporary dynamic subject using a quasi-real-time satellite image captured by the artificial satellite at a time different from a time designated by a user by several hours and estimates a 3D model of the dynamic subject at the time designated by the user from the 3D model of the temporary dynamic subject to generate the real-time image using external information.

8. The image generation device according to claim 3, wherein the image generation unit generates a 3D model of a temporary dynamic subject using a quasi-real-time satellite image captured by the artificial satellite at a time different from a time designated by a user by several hours, generates a quasi-real-time image of the dynamic subject obtained when the 3D model of the temporary dynamic subject is viewed from the predetermined virtual viewpoint in the sky, and generates the real-time image from the quasi-real-time image of the dynamic subject using external information.

9. The image generation device according to claim 7, wherein the image generation unit extracts the dynamic subject from the quasi-real-time satellite image and generates the 3D model of the temporary dynamic subject from the extracted image.

10. The image generation device according to claim 2, wherein the image generation unit uses real-time external information and known information about the dynamic subject as the dynamic subject identification information.

11. The image generation device according to claim 1, wherein the image generation unit generates the 3D model of the stationary subject using an image from which a dynamic subject included in the satellite image captured by the artificial satellite has been removed.

12. An image generation method comprising generating, by an image generation device, a free viewpoint image of a predetermined point on the ground viewed from a predetermined virtual viewpoint in the sky using a 3D model of a stationary subject generated using a satellite image captured by an artificial satellite and dynamic subject identification information that identifies a dynamic subject.

13. A program for causing a computer to serve as an image generation unit that generates a free viewpoint image of a predetermined point on the ground viewed from a predetermined virtual viewpoint in the sky using a 3D model of a stationary subject generated using a satellite image captured by an artificial satellite and dynamic subject identification information that identifies a dynamic subject.
